# FASCICULE DE BREVET EUROPEEN

(11) **EP 0 619 040 B1**
(45) Date de publication et mention de la délivrance du brevet: **11.03.1998**
(21) Numéro de dépôt: 93911661.2
(22) Date de dépôt: 23.12.1992
(51) Int. Cl.: G10C 3/00, G09B 15/06, A47C 16/00, D04B 3/00, G09B 13/04

(54) **SUPPORT POUR LES BRAS ET MAINS D'UN UTILISATEUR D'UN INSTRUMENT OU APPAREIL A CLAVIER, A DESSINER, A TRICOTER**
ARM- UND HANDUNTERSTÜTZUNG FÜR EINEN BENUTZER EINES TASTATUR-, ZEICHEN-, STRICKINSTRUMENTS ODER -GERÄTS
SUPPORT FOR THE ARMS AND HANDS OF A USER OF A KEYBOARD, DRAWING, KNITTING INSTRUMENT OR APPARATUS

(30) Priorité: 26.12.1991 FR 9116182
(43) Date de publication de la demande: 12.10.1994
(73) Titulaire: SABOIA DE ALBUQUERQUE, Maria Eulalia, F-75015 Paris (FR)
(72) Inventeur: SABOIA DE ALBUQUERQUE, Maria Eulalia, F-75015 Paris (FR)
(86) Numéro de dépôt international: FR9201236
(87) Numéro de publication internationale: WO9313515

(56) Documents cités:
- EP-A- 0 222 952
- EP-A- 0 294 717
- BR-A- 65 717
- CH-A- 377 561
- DE-A- 20 671
- DE-A- 23 689
- DE-A- 357 260
- US-A- 1 359 928
- US-A- 4 957 442

## Description

La présente invention concerne des dispositifs mobiles qui servent de support et qui permettent le repos des bras effectuant d'une manière générale des mouvements latéraux et antéro-postérieurs, d'un utilisateur d'instrument ou appareil à clavier, tel qu'un piano, orgue, ordinateur, machine à écrire, appareil de dessin, machine à tricoter, ainsi que le maintien de la position correcte dans le cas d'un pianiste ou organiste pendant qu'il s'exerce à son instrument.

Un tel dispositif constitue tout simplement un point de repos, un appui où l'on place son avant-bras et sa main pour réaliser un travail, par exemple, pianistique très précis et contrôlé. Dans ce travail, il s'agira, d'une part, de faciliter et garantir la détente musculaire au plus haut degré, éliminant ainsi tout effort musculaire superflu ou excessif ; d'autre part, il permet la séparation du travail musculaire autant que possible, pour une coordination plus parfaite. Ce travail musculaire concerne les différents doigts et les différents mouvements faits par la main, l'avant-bras, l'épaule, etc.

Ainsi, en reposant l'avant-bras et la main sur les supports prévus à cet effet, on peut, par exemple, faire travailler exclusivement les doigts et les muscles correspondants à ce travail ; ensuite, on enlève un des supports du dispositif qui se trouve au milieu de la paume de la main, et l'on peut ainsi faire travailler les muscles chargés des mouvements d'extension de la main. en flexion, etc. Si l'on enlève par la suite l'appui qui se trouve en dessous du poignet, on peut articuler l'avant-bras et ainsi de suite.

Ce repos permet, donc, un travail musculaire précis pour une économie d'énergie et pour une plus grande clarté dans l'apprentissage du travail digital et musculaire de la technique, par exemple, pianistique, et contrôler ainsi le niveau de tension et de détente.

On connaît déjà un dispositif de ce genre, à bras mobiles et doté de supports anatomiques pour les bras du pianiste, objet du brevet brésilien N° 65.717 du 27/06/63 et comportant trois bras mobiles juxtaposés et articulés les uns aux autres par des axes verticaux placés aux extrémités de chaque bras et pourvus de roulements à bille. Les articulations entre les trois bras permettent leur pivotement et l'extension des trois bras de manière que, en les allongeant, il soit possible de déplacer la main sur toute la longueur du clavier, ce qui permet de jouer tous les morceaux de musique avec les bras appuyés sur les supports anatomiques solidaires du troisième bras.

Mais, dans un tel dispositif, le premier bras, très long, bloque le libre mouvement en certaines positions, et quand les trois bras sont allongés vers les extrémités du clavier, le retour se fait avec difficulté. D'autre part, les bras juxtaposés gardent difficilement le degré de rigidité nécessaire au maintien d'un niveau horizontal constant pendant les déplacements, surtout vers les extrémités du clavier. Alors, par exemple, ils s'inclinent légèrement vers le sol et le niveau du support pour le poignet descend de quelques centimètres déstabilisant la main, ce qui représente un sérieux handicap.

Si l'on considère que les coudes montent de quelques centimètres quand le pianiste joue vers les notes graves ou aigues, puisque les bras se séparent du tronc, ce dispositif ne permet pas de faire face à cette ascension du coude. Alors, le pianiste est obligé de se pencher de côté afin de baisser ainsi le coude, ce qui représente un autre inconvénient.

Le document D2 = US-A-1-359-928 (Stafford), quant à lui, divulgue un support concave pour les poignets, monté sur un chariot roulant grâce à des roulettes parallèlement et en vis à vis d'un clavier sur un rail fixé par des moyens de support, mais un tel dispositif limité au support des poignets et ne permettant que des mouvements latéraux, ne permet pas d'obtenir ni le pivotement, ni les mouvements antéro-postérieurs .

La présente invention a donc pour but de résoudre ces problèmes dans le cas du piano, et d'une manière générale, pour tout autre instrument ou appareil nécessitant un mouvement des bras et mains latéral et antéro-postérieur, par un dispositif destiné à maintenir un niveau horizontal constant, capable d'une parfaite mobilité circulaire, horizontale et antéro-postérieure, doté de moyens pour suivre l'ascension du coude pendant les déplacements plus éloignés du centre, sans pour autant obliger l'utilisateur à se déplacer pour compenser un éventuel dénivellement du support.

Selon une première caractéristique, l'invention vise un support pour bras et mains d'un utilisateur d'un instrument ou appareil à clavier, à tricoter, à dessiner, ordinateur, machine à écrire, du type comportant des appuis anatomiques concaves pour chaque bras et chaque main, caractérisé en ce que chaque support est disposé sur un chariot correspondant, monté déplaçable par roulement sur un plan horizontal maintenu parallèlement en vis-à-vis d'un clavier par exemple, par des moyens de support, et en ce que des moyens de pivotement sont prévus entre les appuis anatomiques et le chariot, ainsi que des moyens de limitation des mouvements antéro-postérieur et latéral du chariot.

Selon une autre caractéristique, le dispositif est caractérisé en ce que le plan horizontal avec limitation de mouvement antéro-postérieur du chariot est défini par au moins deux portées linéaires horizontales d'un rail sur lequel le chariot est déplaçable linéairement et en ce que sur ledit chariot est monté déplaçable horizontalement dans un plan parallèle à celui-ci de façon pivotante une plaque support des appuis anatomiques, orientable et déplaçable selon un mouvement antéro-postérieur.

Selon l'invention et un premier mode de réalisation, le présent dispositif est un support pour les avant-bras et les mains d'un utilisateur d'instrument ou appareil à clavier, à dessin, ordinateur, machine à écrire, à tricoter, lequel est constitué d'appuis anatomiques concaves pour chaque avant-bras et chaque main, disposés sur des supports déplaçables et pivotants et constitués, pour chacun, d'un chariot monté de façon coulissante sur un rail, et sur chacun d'eux est monté de façon pivotante un support orientable autour d'un axe vertical, et sur lequel est prévu un coulisseau déplaçable selon un mouvement antéro-postérieur auquel sont fixés lesdits appuis anatomiques. Chaque appui anatomique pour l'avant-bras est relié au coulisseau correspondant par une lame flexible dans le sens vertical, et ce coulisseau comporte des moyens de positionnement réglables de ladite lame, permettant d'adapter la position de l'appui en fonction de la morphologie de l'utilisateur ; le support orientable est monté pivotant sur le chariot par l'intermédiaire d'une platine tournante maintenue entre deux pièces fixes solidaires du chariot par deux portées à billes. Le coulisseau responsable du déplacement antéro-postérieur est monté roulant sur sa longueur en appuyant sur des roulements à billes, dans une pièce en forme de U solidaire de la plaque circulaire précédente.

Selon un second mode de réalisation, le plan horizontal avec limitation de mouvement antéro-postérieur est défini par au moins deux portées linéaires horizontales d'un rail sur lequel le chariot est déplaçable linéairement ; et parallèlement au clavier et sur ledit chariot est monté déplaçable dans un plan parallèle à ce dernier de façon pivotante une plaque support des appuis anatomiques orientable par l'intermédiaire d'un bras ou d'une biellette pivotant d'une part sur une articulation d'axe vertical située sur le chariot, et d'autre part sur une articulation également d'axe vertical solidaire de la plaque-support orientable.

Dans ce cas, et selon d'autres particularités, l'articulation entre le bras ou biellette et le chariot est située à une extrémité du chariot latérale, respectivement droite pour le support du bras droit et gauche pour le support du bras gauche.

Selon une autre particularité,les moyens de support du rail présentent par rapport à leur partie de fixation à l'instrument une longueur telle que la distance entre l'avant du clavier et l'axe du rail est inférieure à la somme, d'une part, de la distance entre l'appui du poignet et l'articulation de la plaque-support orientable, et d'autre part, celle séparant les deux articulations du bras ou biellette, de sorte que la plaque-support, lors des déplacements latéraux et antéro-postérieur, soit maintenue sensiblement perpendiculaire au clavier, et que le bras pivotant effectue un déplacement angulaire par rapport à l'axe du rail, limité à environ 30°, même aux positions extrêmes du clavier.

Selon une autre particularité, le bras pivotant est relié à la plaque-support orientable par une articulation située à l'extrémité arrière de ladite plaque-support.

Selon un autre mode de réalisation, le chariot est en appui sur un plan par au moins trois points d'appui, sur au moins une face horizontale dudit plan pour permettre à la fois des déplacements latéral et antéro-postérieur. Des butées avant et arrière sont prévues pour limiter le déplacement antéro-postérieur du chariot, ainsi que des butées latérales pour limiter le déplacement linéaire dudit chariot, sur au moins l'un des éléments de l'ensemble chariot/plan d'appui.

Dans ce cas, et selon d'autres particularités, les points d'appui du chariot sur le plan sont constitués par des billes, en appui elles-mêmes par une portée circulaire à billes par rapport au chariot, de façon à permettre des déplacements en pivotement en outre des déplacements latéraux et avant-arrière.

D'autre part, les appuis concaves sont prévus situés de part et d'autre par rapport au support de telle façon que le centre de gravité du bras reposant sur lesdits appuis concaves soit situé à l'intérieur du polygone de sustentation défini par les positions espacées des appuis à roulement.

Selon une variante, le chariot est en appui sur le plan, et ce sur ses deux faces horizontales, par un ensemble d'au moins 4 points d'appui : au moins deux points d'appui sur le plan supérieur, et au moins un point d'appui en partie inférieure. Dans le cas de 3 points d'appui supérieurs et un point d'appui inférieur, ce dernier est disposé en projection à l'intérieur du polygone de sustentation ; ou dans le cas de 2 points d'appui supérieurs et 2 points d'appui inférieures, par des points d'appui inférieurs hors de l'alignement des points d'appui sur le plan supérieur ; toutes ces réalisations à déplacement sur le plan horizontal permettent à la fois les déplacements latéral et antéro-postérieur. Le chariot peut être prévu enveloppant au moins partiellement le plan horizontal de déplacement pourvu de deux faces horizontales d'appui superposées parallèles, et dans ce cas présentant des parties de liaison sur au moins un côté entre ses branches supérieure et inférieure, espacée(s) du ou des roulements en vis-à-vis d'une distance correspondant au moins au déplacement antéro-postérieur du chariot sur le plan.

Dans toutes ces variantes, les appuis anatomique pour le poignet et la main sont disposés sur une tige montée préférentiellement pivotante directement sur le chariot.

L'invention sera bien comprise à la lecture de la description faite à titre d'exemple et en référence aux dessins ci-joint, dans lesquels plus particulièrement :

Les figures 1 et 2 représentent le dispositif constitué d'un chariot (2) formant support d'appuis anatomiques se déplaçant directement en tous sens, par simple appui sur un plan horizontal (1).

La figure 3 représente par rapport aux figures 1 et 2 le cas où le chariot est appuyé sur les faces supérieure et inférieure du plan.

Les figures 4 à 8 représentent d'autres variantes où le plan horizontal est défini par un rail (lA) sur lequel coulisse linéairement le chariot (2) et supporte par articulation et biellette (fig. 4 et 5) ou par articulation et guide coulissant (fig. 6, 7 et 8) un support (16) d'appuis anatomiques.

Les figures 9 à 12 représentent des systèmes de maintien de ce dispositif parallèlement à un instrument ou appareil.

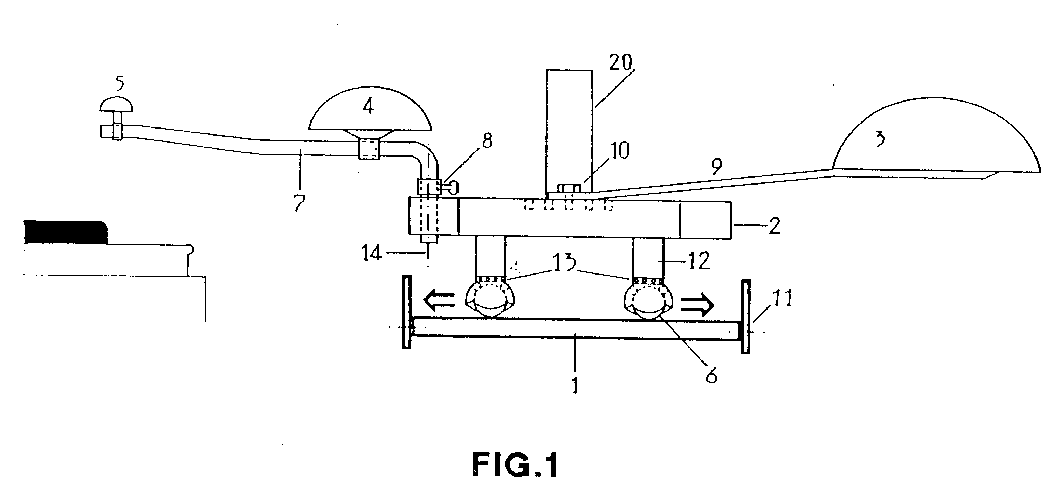

- la figure 1 représente une vue en coupe transversale du dispositif dans laquelle on voit le chariot (2) sur le plan (1) appuyé sur les billes (6), la lame flexible (9) à laquelle est fixé l'appui anatomique (3) de l'avant-bras ainsi que le moyen de réglage (10) de ladite lame ; la tige en forme de L (7) montée pivotante par son axe (14) sur le chariot (2) et munie d'un écrou papillon (8) pour le réglage de la hauteur de ladite tige (7) sur laquelle sont placés les appuis anatomiques 4) du poignet et (5) de la main.

Le plan (1) qui est pourvu de rebords (11) pour limiter le mouvement du chariot (2) et éviter qu'il s'échappe du plan (1).

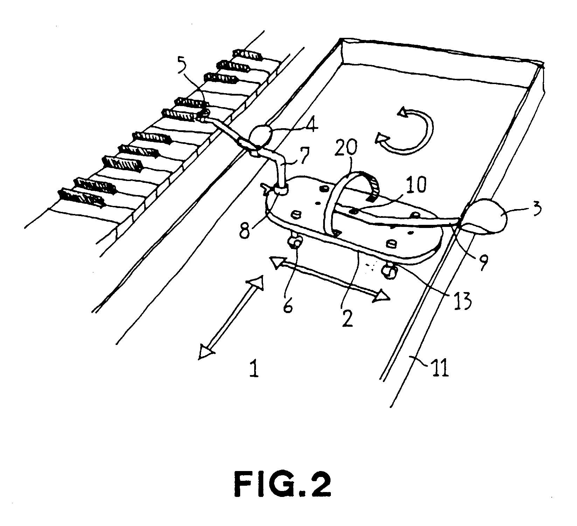

- la figure 2 représente une vue en perspective du dispositif correspondant à la figure 1 avec le chariot (2) en appui sur le plan horizontal (1) par l'intermédiaire des billes (6), la lame flexible (9) support de l'appui (3) montée réglable sur ledit chariot (2), la tige en forme de L (7) montée réglable et pivotante sur la partie avant du chariot (2). Le chariot (2) est pourvu ici de chaque côté des moyens d'attache (20), par exemple sous forme de 2 bandes une de part et d'autre avec parties auto-collantes autour de l'avant-bras pour garantir le maintien du bras sur ledit chariot (2) lors des déplacements linéaires horizontaux.

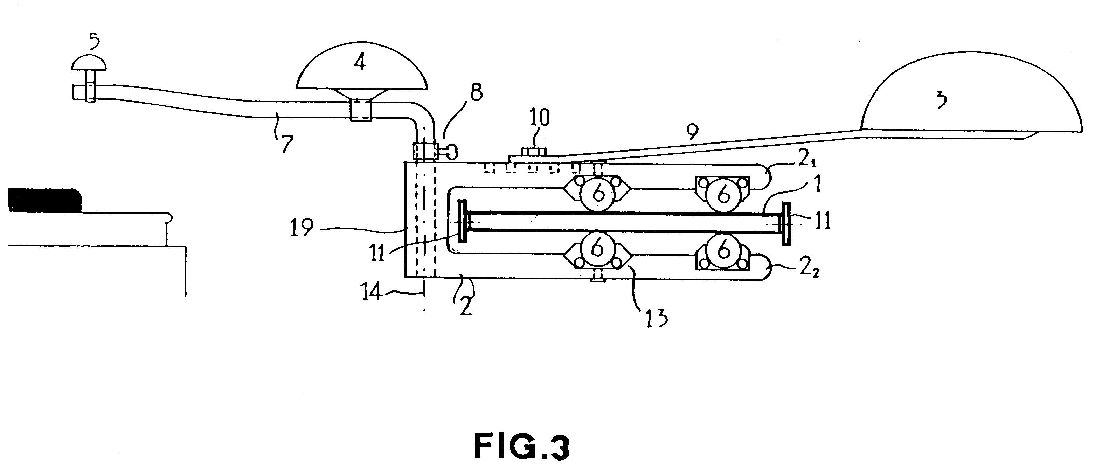

- la figure 3 représente une vue en coupe transversale du dispositif montrant le plan (1) autour duquel s'emboitent les 2 branches (2.1) supérieure et (2.2) inférieure du chariot (2) en appui sur les billes (6) ; les deux branches (2.1) et (2.2) présentent des parties de liaison (19) sur au moins un côté du chariot (2) espacée(s) du ou des roulements (6) en vis-à-vis.

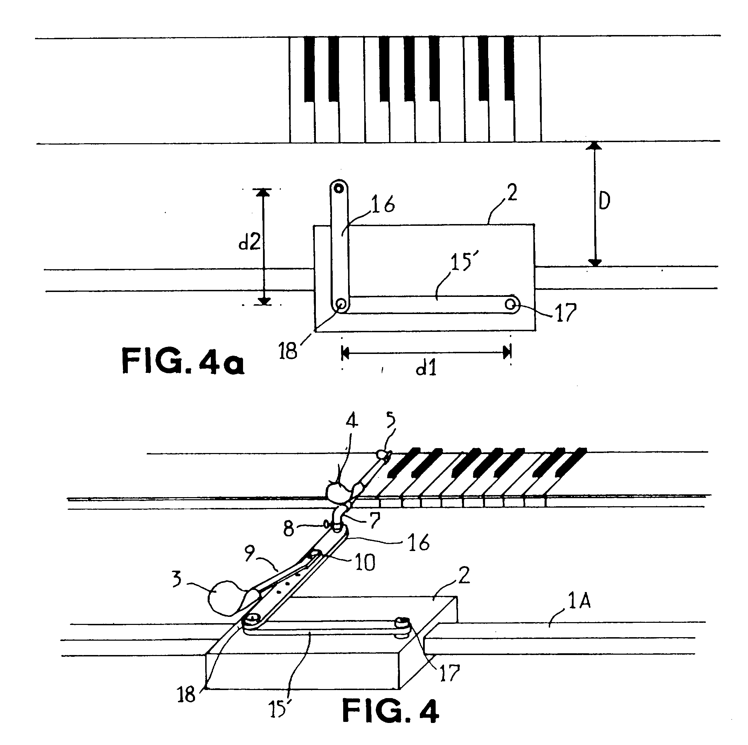

- la figure 4 représente une vue en perspective d'un mode de réalisation du dispositif en position d'utilisation dans laquelle le plan horizontal est réalisé sous forme d'un rail (lA) sur lequel est monté de façon coulissante le chariot (2), et sur lequel est à son tour monté, de façon pivotante par une articulation (17) d'axe vertical, un bras pivotant (15') qui est disposé et se déplace dans un plan parallèle au rail (lA) et au chariot (2). A l'autre extrémité de ce bras est montée de façon également pivotante par une articulation (18) d'axe vertical une plaque-support orientable (16) sur laquelle sont fixés les supports anatomiques (3), (4), (5) ; les articulations (17), (18) assurent le mouvement antéro-postérieur du support orientable (16).
- la figure 4A est une vue de dessus du dispositif avec le détail des distances, d'une part dl entre les deux articulations (17), (18) sur lesquelles s'articule le bras ou biellette (15'), d'autre part d2 entre le support anatomique du poignet (4) et l'articulation (18). La somme de ces distances d1 + d2 devant être supérieure à D, illustrant ainsi que la plaque-support (16) lors des déplacements latéral et antéro-postérieur est maintenue sensiblement perpendiculairement au clavier et que le bras pivotant (15') effectue un déplacement angulaire par rapport à l'axe du rail (lA) limité à environ 30°, même aux positions extrêmes du clavier.

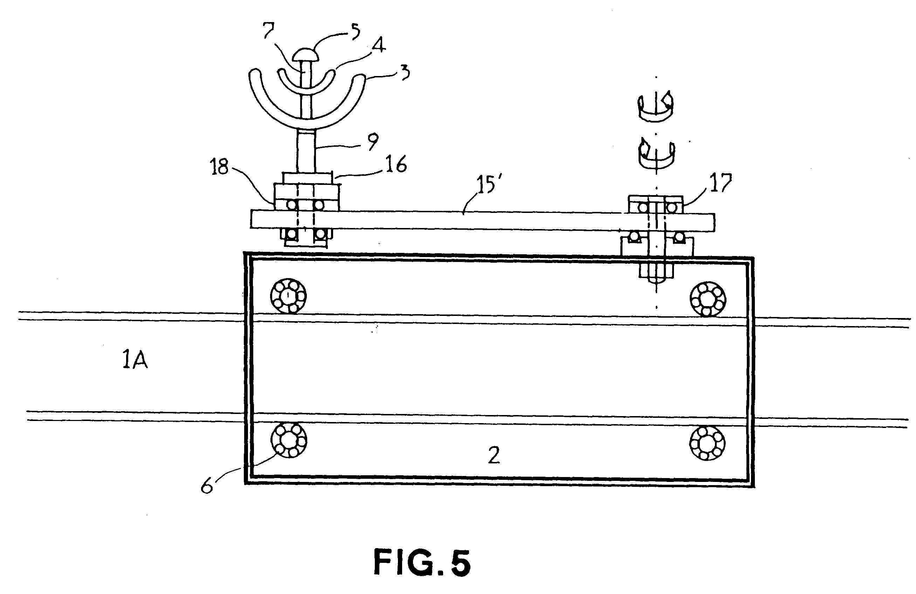

- la figure 5 est une vue du dispositif en coupe longitudinale dans le plan vertical du rail, selon la figure 4, faisant apparaître le rail (lA) autour duquel glisse le chariot (2) sur les billes ou galets de billes (6), le bras pivotant (15') monté sur l'articulation (17) placée à une extrémité du chariot (2), la plaque-support orientable (16) sur laquelle sont fixés les appuis anatomiques (3), (4), (5), et encore l'articulation (18) qui permet le pivotement de ce support (16) et les déplacements antéro-postérieurs.

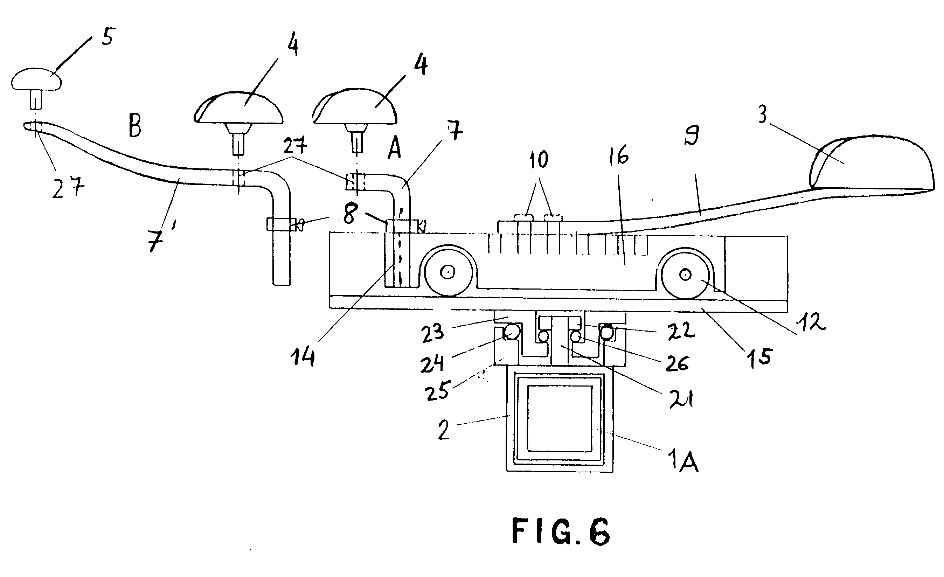

- la figure 6 représente une vue latérale du dispositif, montrant le rail (1A), le chariot (2), l'articulation horizontale composée de deux pièces (23) et (25), de la vis (21), de l'écrou (22) et des billes (24) et (26) on voit encore le profilé en forme de U (15) avec le coulisseau qui glisse à son intérieur sur les roulements à bille (12) et sur lequel se trouve maintenue par des vis (10) la lame flexible (9) s'étendant vers l'arrière et portant le support anatomique concave (3) de la partie postérieure de l'avant-bras ; et dans la partie frontale du coulisseau sont reçues des tiges interchangeables (7) et (7') pourvues de trous (21), des supports du poignet (4) et de la main (5) et d'écrous papillons (8) de réglage en hauteur.

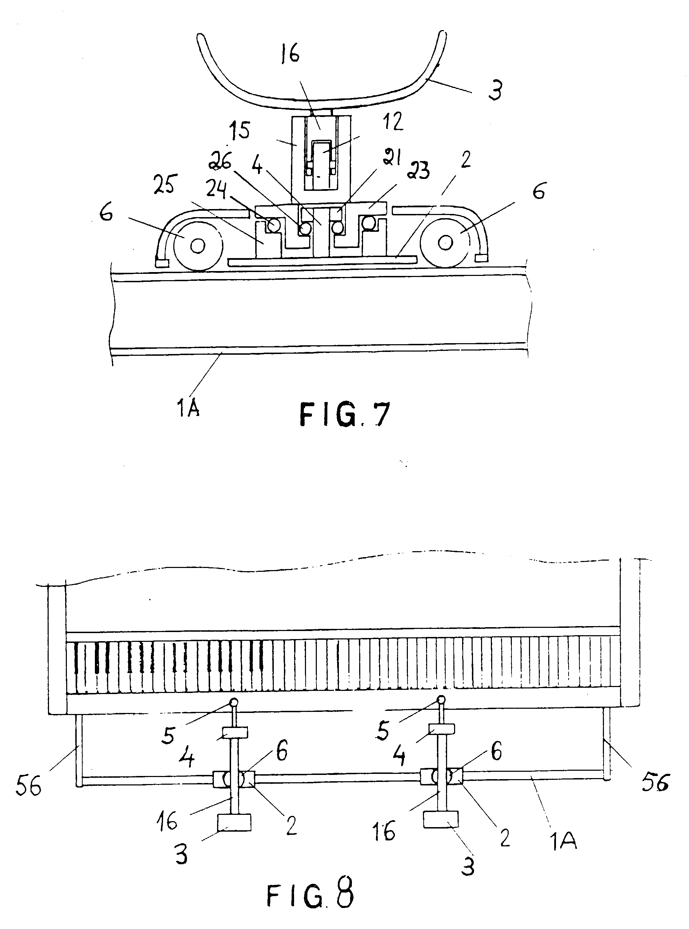

- la figure 7 montre une vue de face faisant apparaître le chariot (2) coulissant par deux roulements ou galets (6) sur le rail (1A), et d'autre part, la forme en U, en section, du profilé (15) de guidage du coulisseau (16) et de l'appui anatomique (3).
- la figure 8 est une vue de dessus de ce dispositif qui est fixé devant le clavier. Sur le rail (1A), on voit le chariot (2), les pièces circulaires (23) et le coulisseau (16) sur lequel sont posés les 3 supports anatomiques (3), (4), (5) pour les bras.

Ainsi, en référence à ces dessins, l'invention vise selon les illustrations présentées sur les figures 1 et 2 un support pour les bras et mains d'un utilisateur d'un instrument ou appareil à clavier, à dessiner, à tricoter, du type comportant des appuis concaves pour chaque bras et chaque main, caractérisé en ce que chaque support est disposé sur un chariot correspondant monté déplaçable par roulement ou glissement sur un plan horizontal rectangulaire avec les bords arrondis avant et arrière, et ledit chariot (2) est en appui directement sur un plan (1) par quatre points (6) ou plus si nécessaire, sur la face horizontale supérieure du plan (1) pour permettre à la fois les déplacements latéral et antéro-postérieur, et des butées (11) tout autour du plan sont prévues, ici sur les bords du plan (1) lui-même, pour limiter le mouvement antéro-postérieur et linéaire du chariot (2). La lame flexible (9) et la tige en forme de L (7) qui portent les appuis anatomiques (3), (4), (5), sont montées directement sur le chariot (2), la tige en L (7) est montée pivotante par son axe (14) dans un orifice situé à la partie avant du chariot (2) et réglable par une vis à écrou papillon (8).

Les appuis dudit chariot (2) sont ici constitués par des billes (6) et sont eux-mêmes en appui sur des portées à billes (13) pour permettre en plus des déplacements latéral et antéro-postérieur, le déplacement par pivotement des appuis (6). Le chariot (2) peut comporter des moyens d'attache (20) de l'avant-bras du pianiste audit chariot, pour garantir le maintien de l'avant-bras sur ledit chariot lors des déplacements latéraux, comme illustré en figure 2.

Selon une variante de ce mode de réalisation correspondant à la figure 3, le chariot (2) est en appui sur au moins 3 points d'appui constitués par des billes (6) sur les deux surfaces horizontales du plan (1), le chariot (2) enveloppe au moins partiellement le plan (1) et ses branches supérieure (2.1) et inférieure (2.2) sont reliées entre elles par au moins une partie de liaison (19) située à l'avant dudit chariot (2) et avant et arrière s'il y a deux parties de liaison.

Selon le mode de réalisation correspondant aux figures 4 et 5, le chariot (2) est monté coulissant autour d'un rail (lA) déplaçable linéairement en appui par exemple sur des cages à billes (6) sur chaque face dudit rail (1A) ; sur ledit chariot (2) et perpendiculairement au plan de celui-ci est monté déplaçable de façon pivotante une plaque support (16) des appuis anatomiques (3), (4), (5) orientable par l'intermédiaire d'un bras ou biellette (15') pivotant d'une part sur une articulation d'axe vertical (17) située sur le chariot (2) et d'autre part sur une articulation également d'axe vertical (18) solidaire de la plaque-support orientable (16).

L'articulation entre le bras ou biellette (15') et le chariot (2) est située à l'extrémité latérale du chariot (2) respectivement droite pour le support du bras droit et gauche pour le support du bras gauche. Les articulations (17) et (18) permettent le mouvement antéro-postérieur de la plaque-support (16). Le bras ou biellette (15') est déplaçable parallèlement au chariot (2) et lors des déplacements antéro-postérieurs, il se maintient sensiblement dans cette position, et effectue un déplacement angulaire par rapport à l'axe du rail, limité à environ 30° même aux positions extrêmes du clavier.

Il est important de constater la différence entre le fonctionnement du présent système et celui proposé dans le brevet brésilien N° 65.717 du 27/06/63 déjà connu. Dans ce dernier, l'absence d'un plan horizontal de déplacement était compensée par le prolongement (ou extension) des trois bras le long du clavier pour permettre le déplacement latéral. Les trois bras superposés pivotants s'allongeaient considérablement pour permettre à la main d'atteindre les positions extrêmes du clavier. Dans le mode de réalisation présenté ici dans la présente invention, le bras pivotant (15') est utilisé presque exclusivement comme un élément d'un système de déplacement antéro-postérieur et sa position parallèle sur le chariot est limitée et sensiblement constante, ce qui évite des risques de coincement lors du repli des bras après une extension maximum, où ceux-ci se trouvaient dans le prolongement les uns des autres, entraînant des difficultés de maintien selon un plan horizontal.

Selon un autre mode de réalisation correspondant aux figures 6, 7 et 8, le présent dispositif est composé d'un rail (lA) qui présente préférentiellement un profil carré qui est placé devant le clavier du piano, et sur lequel sont placés deux chariots (2) qui peuvent glisser sur toute la longueur du rail. Chaque chariot est composé d'un support carré (2) qui entoure le rail (1A) et qui est pourvu de roulements à billes (6). Pour faciliter le pivotement du bras, le chariot est doté d'une articulation horizontale constituée d'une pièce circulaire (15) qui contient les billes (26) et sur lesquelles s'appuie une autre pièce (23) tournante. Pour empêcher la sortie de cette pièce (23), on la retient au milieu du chariot à l'aide d'une vis (21) et d'un écrou (22). Au dessus de la pièce (23) s'attache horizontalement un profilé (15) en forme de U dans lequel peut rouler sur sa longueur un coulisseau (16) qui est monté sur des roulements à bille (12). Pour éviter le frottement, on place les billes (26) entre l'écrou (21) et la pièce (23).

Sur le coulisseau (16), on fixe la lame flexible (9) par deux vis (10). Cette lame reçoit le support anatomique (3) sur l'extrémité opposée. A l'autre extrémité de ce coulisseau il y a un trou (14) destiné à recevoir le deuxième support où va s'appuyer le poignet et la main.

Quand on veut appuyer seulement le poignet, on place dans ce trou un support formé d'une tige en L (7) sur la pointe de laquelle il y a un orifice (27) où l'on insère un support anatomique plus petit (4). Si nous désirons appuyer aussi la main, l'on introduit une autre tige plus longue (7') sur laquelle il y a deux orifices (27) et (27'), le premier pour le support destiné au poignet (4) et le deuxième plus petit en forme de boule (5) où va se reposer la paume de la main du pianiste. Les tiges de ces deux supports sont entourées par une bague avec vis papillon de fixation (8) pour régler la hauteur du poignet et de la main. Les petits supports (4) et (5) et les éléments complémentaires (7) et (7') sont pivotants.

## Revendications

1. Support pour bras et mains d'un utilisateur d'un instrument ou appareil à clavier, à dessin, à tricoter, du type comportant des appuis anatomiques concaves pour chaque bras et chaque main, caractérisé en ce que chaque support est disposé sur un chariot (2) correspondant, monté déplaçable par des moyens de roulement (6), (13) sur un plan horizontal (1), (1A) maintenu parallèlement en vis-à-vis d'un clavier par exemple, par des moyens de support, et en ce que des moyens de pivotement (14), (14)-(15), (23) sont prévus entre les appuis anatomiques (3), (4), (5) et le chariot (2) ainsi que des moyens de limitation (11), (1A), (50) des mouvements antéro-postérieur et latéral du chariot (2).

2. Support pour bras et mains selon revendication 1, caractérisé en ce que le plan horizontal (1) avec limitation de mouvement antéro-postérieur du chariot (2) est défini par au moins deux portées linéaires horizontales d'un rail (1A) sur lequel le chariot (2) est déplaçable linéairement et en ce que sur ledit chariot (2) est montée déplaçable horizontalement dans un plan parallèle à celui-ci de façon pivotante une plaque-support (16) des appuis anatomiques (3), (4), (5), orientable et déplaçable selon un mouvement antéro-postérieur.

3. Dispositif selon revendications 1 et 2, caractérisé en ce que les supports déplaçables des appuis anatomiques (3), (4), (5) sont constitués, pour chacun, d'un chariot (2) monté de façon coulissante sur un rail (1A), et reçoivent sur chacun d'eux, de façon pivotante, un support orientable (15) autour d'un axe vertical (21) et sur lequel est monté déplaçable un coulisseau (16) formant plaque de support auquel sont fixés lesdits appuis anatomiques (3), (4), (5).

4. Support pour bras et mains selon revendications 1 et 2, caractérisé en ce que la plaque-support (16) des appuis anatomiques 3), (4), (5) est orientable par l'intérmédiaire d'un bras ou biellette (15') pivotant d'une part sur une articulation d'axe vertical (17) située sur le chariot (2) et d'autre part sur une articulation également d'axe vertical (18) solidaire de la plaque-support orientable (16).

5. Dispositif selon l'une quelconque des revendications 1 à 4, caractérisé en ce que chaque appui anatomique de l'avant-bras est relié au support (16) correspondant par une lame (9) flexible dans le sens vertical et en ce que ledit support (16) comporte des moyens de réglage de positionnement de ladite lame (10), permettant d'adapter la position de l'appui en fonction de la morphologie de l'utilisateur.

6. Support pour bras et mains selon revendication 3, caractérisé en ce que le support orientable (16) est monté pivotant sur le chariot (2) par l'intermédiaire d'une platine tournante (23) maintenue entre deux pièces fixes solidaires du chariot (2) par deux portées à billes (24), (26).

7. Dispositif selon la revendication 3, caractérisé en ce que le support orientable coulisseau (16) formant système de déplacement antéro-postérieur est monté roulant sur sa longueur en appui sur des chemins de roulements à billes (6) dans une pièce en forme de U (15) solidaire de la platine tournante (23).

8. Support pour bras et mains selon revendication 4, caractérisé en ce que l'articulation (17) entre le bras ou biellette (15') et le chariot (2) est située à une extrémité du chariot, latérale respectivement droite pour le support du bras droit, et gauche pour le support du bras gauche.

9. Support pour bras et mains selon revendication 1 et l'une des revendications 4 ou 8, caractérisé en ce que les moyens de support du rail présentent une longueur par rapport à leur partie de fixation à l'instrument telle que la distance entre l'avant du clavier et l'axe du rail (1A) est inférieure à la somme, d'une part, de la distance entre l'appui du poignet (4) et l'articulation (18) de la plaque-support orientable (16), et d'autre part, celle séparant les deux articulations (17), (18), du bras ou biellette (15'), de sorte que la plaque-support (16) soit, lors des déplacements latéral et antéro-postérieur maintenue sensiblement perpendiculairement au clavier et que le bras pivotant (15') effectue un déplacement angulaire par rapport à l'axe du rail (1A), limité à environ 30°, même aux positions extrêmes du clavier.

10. Dispositif selon revendication 1, caractérisé en ce que le chariot (2) est en appui sur le plan (1) par au moins 3 points d'appui (12) sur au moins une face horizontale dudit plan (1) pour permettre à la fois des déplacements latéral et antéro-postérieur, et en ce que des butées avant-arrière et latérales (11) de limitation du déplacement antéro-postérieur de chaque chariot (2) sont prévus sur au moins l'un des éléments de l'ensemble chariot (2)/plan d'appui (1).

11. Support pour les bras et mains selon revendications 1 et 10, caractérisé en ce que les points d'appui (12) son constitués par des billes (6) en appui elles-mêmes par une portée circulaire à billes (13) par rapport au chariot (2), de sorte à permettre des déplacements en pivotement en outre des déplacements latéral et avant-arrière.

12. Dispositif selon revendication 1, 10 ou 11, caractérisé en ce que les appuis anatomiques (3), (4), (5) sont situés de part et d'autre par rapport au chariot (2) formant support (16) de telle façon que le centre de gravité du bras reposant sur lesdits appuis anatomiques soit situé à l'intérieur du polygone de sustentation défini par les positions espacées des appuis (12).

13. Support pour bras et mains selon revendication 10 ou 11, caractérisé en ce que le chariot (2) enveloppe au moins partiellement le plan horizontal de déplacement (1) pourvu de deux faces horizontales d'appui superposées parallèles et présente des parties de liaison (19) sur au moins un côté entre ses branches supérieure (2.1) et inférieure (2.2) espacées du ou des appuis (12) en vis-à-vis d'une distance correspondant au moins au déplacement antéro-postérieur du chariot (2) sur le plan (1).

## Patentansprüche

1. Arm- und Handunterstützung für einen Benutzer eines Tastatur, Zeichen-, Strickinstruments oder -Geräts, bestehend aus konkaven anatomischen Auflagen für jeden Arm und jede Hand, dadurch gekennzeichnet, dass jede Unterstützung auf einem entsprechenden Wagen (2) angeordnet ist, der über Rollmittel (6), (13) in einer waagerechten Ebene (1), (lA) verfahrbar gelagert ist, die gegenüber zum Beispiel einer Tastatur durch Tragmittel in einer parallelen Lage gehalten wird, und dass Schwenkmittel (14), (14-15), (23) zwischen den anatomischen Auflagen (3), (4), (5) und dem Wagen (2) sowie Begrenzungsmittel (11), (1A) (50) der Vor-, Rückwärts- und Seitenbewegung des Wagens (2) vorgesehen sind.

2. Arm- und Handunterstützung nach Anspruch 1, dadurch gekennzeichnet, dass die Horizontalebene (1) mit der begrenzten Vor- und Rückwärtsbewegung des Wagens (2) durch mindestens zwei geradlinige horizontale Lagerflächen einer Schiene (1A) bestimmt ist, auf welcher der Wagen (2) linear verfahrbar ist, und dass eine drehbare, gemäss einer Vor- und Rückwärtsbewegung verfahrbare Tragplatte (16) der anatomischen Auflagen (3), (4), (5) auf diesem Wagen (2) horizontal in einer zu diesem parallelen Ebene schwenkbar und verfahrbar montiert ist.

3. Vorrichtung nach Anspruch 1 und 2, dadurch gekennzeichnet, dass die verfahrbaren Tragmittel der anatomischen Auflagen (3), (4), (5) jeweils aus einem auf einer Schiene (1A) gleitbar montierten Wagen (2) bestehen, und jeweils eine um eine senkrechte Achse (21) drehbare Abstützung (15) schwenkbar aufnehmen, auf welcher ein als Tragplatte ausgebildeter Schlitten (16) mit diesen daran befestigten anatomischen Auflagen (3), (4), (5) verfahrbar angeordnet ist.

4. Arm- und Handunterstützung nach Anspruch 1 und 2, dadurch gekennzeichnet, dass die Tragplatte (16) der anatomischen Auflagen (3), (4), (5) über einen Arm oder eine Stange (15') drehbar ist, der einerseits an einem auf dem Wagen (2) angeordneten Gelenk (17) mit senkrechter Achse und anderseits an einem mit der drehbaren Tragplatte verbundenen Gelenk (18) ebenfalls mit senkrechter Achse schwenkbar ist.

5. Vorrichtung nach irgendeinem der Ansprüche 1 bis 4, dadurch gekennzeichnet, dass jede anatomische Auflage des Vorderarms mit der entsprechenden Tragplatte (16) über eine in senkrechter Richtung biegsamen Lamelle (9) verbunden ist, und dass diese Tragplatte (16) Einstellmittel zur Positionierung dieser Lamelle (10) zwecks Anpassung der Auflage entsprechend der Morphologie des Benutzers aufweist.

6. Arm- und Handunterstützung nach Anspruch 3, dadurch gekennzeichnet, dass die drehbare Tragplatte (16) auf dem Wagen (2) mittels einer Drehplatine (23) schwenkbar gelagert ist, die zwischen zwei mit dem Wagen (2) über zwei Kugellagerflächen (24), (26) verbundene Festteile festgehalten wird.

7. Vorrichtung nach Anspruch 3, dadurch gekennzeichnet, dass die als Vor- und Rückwärtsbewegungssystem ausgebildete drehbare schlittenartige Tragplatte über ihre Länge rollend montiert ist, wobei diese auf Kugellagerbahnen (6) in einem U-formigen mit der Drehplatine (23) verbundenen Teil (15) abgestützt ist.

8. Arm- und Handunterstützung nach Anspruch 4, dadurch gekennzeichnet, dass das Gelenk (17) zwischen dem Arm oder der Stange (15') und dem Wagen (2) an einem Wagenende seitlich jeweils rechts für die Abstützung des rechten Armes bzw. links für die Abstützung des linken Armes angeordnet ist.

9. Arm- und Handunterstützung nach Anspruch 1 und einem der Ansprüche 4 oder 8, dadurch gekennzeichnet, dass die Tragmittel der Schiene zu ihrem Befestigungsteil am Instrument eine derartige Länge aufweisen, dass der Abstand zwischen der Tastaturvorderseite und der Schienenachse (1A) kleiner ist als die Summe einerseits der Distanz zwischen der Handqelenkauflaqe (4) und dem Gelenk (18) der drehbaren Tragplatte (16) und anderseits derjenigen, welche die beiden Gelenke (17), (18) des Armes oder der Stange (15') trennt, sodass die Tragplatte (16) bei den Seiten-, Vor- und Rückwärtsbewegungen im wesentlichen in einer zur Tastatur senkrechten Lage festgehalten wird, und dass der Schwenkarm (15') eine Winkelbewegung zur Schienenachse (1A) ausführt, die auch in den extremen Lagen der Tastatur auf ca. 30° begrenzt ist.

10. Vorrichtung nach Anspruch 1, dadurch gekennzeichnet, dass der Wagen (2) in der Ebene (1) über mindestens drei Lagerstellen (12) auf mindestens einer Horizontalfläche dieser Ebene (1) abgestützt ist, um sowohl Seiten- als auch Vor- und Rückwärtsbewegungen zu ermöglichen, und dass Vorder-, Hinter- und Seitenanschläge (11) zur Begrenzung der Vor- und Rückwärtsbewegung von jedem Wagen (2) an mindestens einem Teil der aus Wagen (2) und Auflageebene (1) gebildeten Einheit vorgesehen sind.

11. Arm- und Handunterstützung nach Anspruch 1 und 10, dadurch gekennzeichnet, dass die Lagerstellen (12) aus Kugeln (6) bestehen, die sich ihrerseits auf einer kreisförmigen Kugellagerfläche (13) in bezug auf den Wagen (2) abstützen, um somit Schwenkbewegungen zusätzlich zu den Seiten-, Vor- und Rückwärtsbewegungen zu ermöglichen.

12. Vorrichtung nach Anspruch 1, 10 oder 11, dadurch gekennzeichnet, dass die anatomischen Auflagen (3), (4), (5) beiderseits des als Tragplatte ausgebildeten Wagens (2) angeordnet sind, sodass der Schwerpunkt des auf diesen anatomischen Auflagen aufliegenden Armes innen in einem Tragpolygon liegt, das durch die Lagen der im Abstand voneinander befindlichen Lagerstellen (12) bestimmt ist.

13. Arm- und Handunterstützung nach Anspruch 10 oder 11, dadurch gekennzeichnet, dass der Wagen (2) mindestens teilweise die horizontale Verfahrebene (1) umgibt, die zwei horizontale, übereinenaderliegende parallele Auflageflächen aufweist und Verbindungsteile (19) auf mindestens einer Seite zwischen seinen oberen (2.1) und unteren (2.2) von der oder den Lagerstellen (12) im Abstand befindlichen Schenkel gegenüber einem Abstand, der mindestens der Vor- und Rückwärtsbewegung des Wagens (2) in der Ebene (1) entspricht, umfasst.

## Claims

1. Arm and hand support for a user of a keyboard, drawing or knitting instrument or device, of the type containing concave anatomical rests for each arm and hand, characterized by the fact that each support is set out on a corresponding carriage (2), mounted and movable by rolling on a horizontal plane (1), (1A) and maintained parallel to a keyboard for example, by supports, and characterized by pivoting devices (14)/(14)-(15)/(23) provided between the anatomical rests (3), (4), (5) and the carriage (2), as well as devices to limit forward and backward and linear movements of the carriage (2).

2. Arm and hand support according to claim 1, characterized in that the horizontal plane (1) limiting forward and backward movement of the carriage (2), is defined by at least two horizontal linear spans of a rail (1A) on which the carriage (2) can be moved linearly and characterized in that a support-plate (16) for anatomical rests(3), (4), (5), is pivot mounted on the said carriage (2) for horizontal movement in a plane parallel to the carriage and which can be directed and moved forwards and backwards.

3. Device according to claims 1 and 2, characterized in that the moveable supports of the anatomical rests (3), (4), (5), are each constituted of a carriage (2) slide-mounted on a rail (1A), and each receiving a pivot mounted support which can be directed around a vertical axis (21) and on which a movable sliding block (16) is mounted forming a support plate to which are attached the said anatomical bases (3), (4), (5).

4. Arm and hand support according to claims 1 and 2, characterized in that the support plate (16) for anatomical rests (3), (4), (5) can be directed by means of an arm or connecting rod (15') pivoting firstly on a vertical axis joint (17) located on the carriage (2) and secondly on another vertical axis joint (18) integrated to the adjustable support plate (16).

5. Device according to any of the claims 1 to 4, characterized in that each anatomical base of the forearm is linked to the corresponding support (16) by a flexible blade (9) in the vertical direction and in that the said support (16) contains means of adjusting the position of the said blade (10) enabling the position of the base to be adapted depending on the morphology of the user.

6. Arm and hand support according to claim 3, characterized in that the adjustable support (16) is pivot-mounted on the carriage (2) by means of a turning panel (23) maintained between two fixed parts integrated into the carriage (2) by two ball bearings (24), (26).

7. Device according to claim 3, characterized in that the sliding block adjustable support (16) forming the forward and backward movement system is roller-mounted over its length and supported on ball bearing paths (6) in a U-shaped part (15) integrated into the turning panel (23).

8. Arm and hand support according to claim 4, characterized in that the joint (17) between the arm or rod (15') and the carriage (2) is located at one end of the carriage, at the right side for the right arm support and left side for the left arm support.

9. Arm and hand support according to claim 1, and one of the claims 4 or 8, characterized in that the rail support devices are of such a length in relation to their instrument attachment part, that the distance between the front of the keyboard and the axis of the rail (1A) is less than the sum, firstly, of the distance between the wrist support (4) and the joint (18) of the adjustable support plate, and secondly that separating both joints (17) and (18) of the arm or rod (15'), in such a way that the support plate (16), in lateral and forward and backward movements, is maintained more or less perpendicular to the keyboard and that the pivoting arm (15') moves in an angle in relation to the rail axis (1A), limited to around 30°, even in the extreme positions of the keyboard.

10. Device according to claim 1, characterized in that the carriage (2) is supported on the plane (1) by at least 3 support points (12) over at least one horizontal side of the said plane (1) to enable both side and forward and backward movements, and in that front-back and side stops (11) to limit forward and backward travel of each carriage (2) are provided on at least one of the elements of the carriage (2)/support plane (1) assembly.

11. Arm and hand support according to claims 1 and 10, characterized in that support points (12) comprise balls (6) supported themselves by a circular ball bearing (13) in relation to the carriage (2) so as to allow for pivot movements apart from side and backward and forward movements.

12. Device according to claims 1, 10 or 11, characterized in that the anatomical bases (3), (4), (5) are located on either side of the carriage (2) forming a support (16) in such a way that the centre of gravity of the arm resting on the said anatomical bases is located within the support polygon defined by the spaced positions of the bases (12).

13. Arm and hand support according to claims 10 or 11, characterized in that the carriage (2) at least partially takes in the horizontal movement plane (1) with two horizontal superposed and parallel supporting sides, and with linking parts (19) on at least one side between the upper (2.1) and lower (2.2) spaced branches of the base(s) (12) opposite a distance corresponding to at least the forward and backward movement of the carriage (2) on the plane (1).
